# EUROPEAN PATENT SPECIFICATION

(11) **EP 2 208 627 B1**
(45) Date of publication and mention of the grant of the patent: **22.08.2012**
(21) Application number: 08842011.2
(22) Date of filing: 22.10.2008
(51) Int. Cl.: B60H 1/32, A47C 17/80, A47C 21/04, B60H 1/00, B60H 1/26

(54) **ON-VEHICLE TEMPERATURE CONTROLLER**
TEMPERATURSTEUERUNG AN BORD EINES FAHRZEUGES
RÉGULATEUR DE TEMPÉRATURE EMBARQUÉ

(30) Priority: 26.10.2007 JP 2007278525; 05.09.2008 JP 2008228354
(43) Date of publication of application: 21.07.2010
(73) Proprietor: Toshiba Consumer Electronics Holdings Corporation, Tokyo 101-0021 (JP); Toshiba Home Appliances Corporation, Tokyo 101-0021 (JP)
(72) Inventor: EMURA, Yuji, Osaka 532-0012 (JP); ISHIKAWA, Hiroya, Osaka 532-0012 (JP); MATSUI, Keishi, Osaka 532-0012 (JP); OKAMOTO, Eiichi, Osaka 532-0012 (JP); NAKATA, Takayuki, Osaka 532-0012 (JP); SAKAMOTO, Noriaki, Tokyo 105-8001 (JP); OCHIAI, Koichiro, Tokyo 105-8001 (JP)
(74) Representative: Maury, Richard Philip
(86) International application number: PCT/JP2008/069156
(87) International publication number: WO 2009/054418

(56) References cited:
- EP-A2- 1 681 191
- WO-A1-2004/071854
- FR-A1- 2 769 263
- JP-A- 49 031 034
- JP-A- 2002 356 111
- JP-A- 2005 082 002
- JP-A- 2007 098 044
- JP-A- 2007 105 084
- JP-U- 3 123 729
- JP-U- 3 123 729

## Description

### Technical Field

The present invention relates to a vehicle-mounted temperature control device which is installed in a cabin for sleeping, etc. in a cab of a truck to blow off cooled or warmed air.

### Background Art

Conventionally, in a cab of an automobile, such as a truck, a bedroom for getting sleep is provided in the vehicle so that rest or sleep can be performed in a recumbent position in the case of driving for long-distance transport, etc. When getting sleep, temperature and humidity conditions change depending on seasons or areas. Therefore, a control has been performed by using bedding which is thick and has high heat insulation performance or by using bedding which is thin and has high moisture absorbency. Moreover, on high-temperature, high-humidity and sultry nights in summer, an air-conditioner is operated to control the air in a room to secure comfortable sleeping.

In the above methods, year-round adjustment of the bedding is complicated, power consumption becomes large in the air conditioning of the whole room by the operation of an air-conditioner, and an idling operation is needed. These have a great influence on global warming accompanying not only power consumption but discharge of much carbon dioxide gas. For this reason, although the idling stop of the automobile has recently been greatly requested as an available measure for the reduction of carbon dioxide gas, practically, visible accomplishments do not appear, but a great environmental problem is caused.

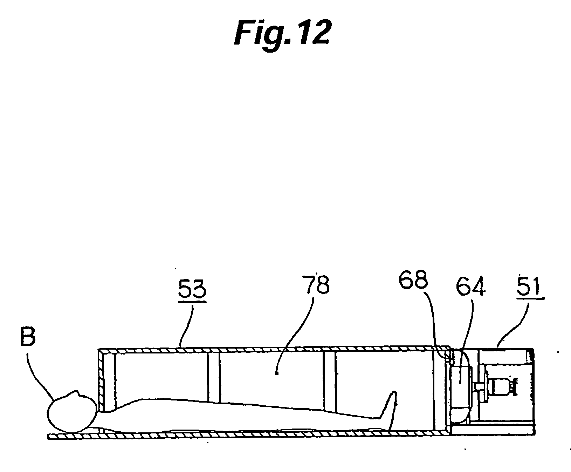

Meanwhile, as shown in Fig. 12, Patent Citation 1 discloses a configuration in which the air from an air conditioner (51) which has a heat exchanger (64) and a blower(68) is circulated into a sleeping bag (53) in which a space (78) where a human being (B) lies is formed so that the inside of the space is cooled, and thereby, a refrigerating machine itself is operated with small electric power so that waste of an energy resource and environment pollution are suppressed.

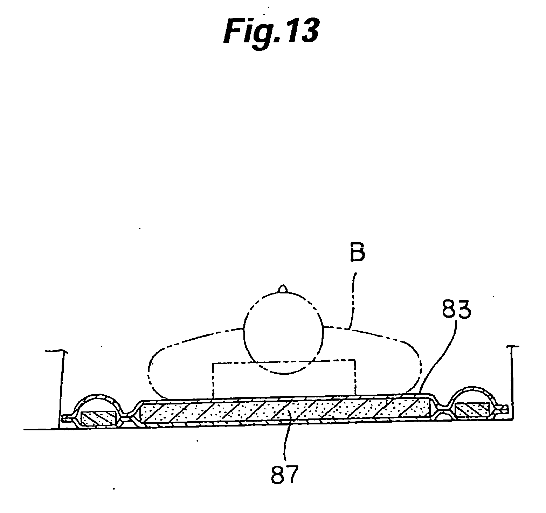

Additionally, Patent Citation 2 shown in Fig. 13 discloses the structure of an air circulation type mat in which a heat exchanger is provided at one longitudinal end of a mat (83) which extends flatly and horizontally so as to supply heat-exchange air, and the supplied air flows through a breathable mat (87) so that a comfortable feeling for a human being (B) is obtained.
Patent Citation 1] JP-A-2007-098044
[Patent Citation 2] JP-A-2007-105084

### Disclosure of Invention

### Problems that the Invention is to Solve

However, when the sleeping bag described in Patent Citation 1, or the mat device described in Patent Citation 2 is installed in a vehicle body of a truck, etc., there are a number of problems to be solved in that an air-conditioner along with the sleeping bag or the mat should be installed in a narrow cabin space, the installation configuration or installation operation becomes extremely difficult, and the processing of exhaust air or frosted water, or the configuration which prevents entering of noise or heat from the outside are needed.

The invention was made in consideration of the above circumstances, and the object of the invention is to provide a vehicle-mounted temperature control device capable of effectively discharging the exhaust air, which is generated during the driving of a temperature control unit which blows off cooled or warmed air, to the outside of a vehicle.

EP1681191A and WO 2004/071854 disclose a vehicle-mounted temperature control device comprising: a temperature control unit which is attached to the inside of a vehicle to blow off the air temperature-controlled by a cooling or warming action, and an exhaust port which is provided at the wall of a vehicle body to discharge the exhaust air generated during the driving of the temperature control unit to the outside of the vehicle.

The invention is the device of claim 1.

### Advantage of the Invention

According to the invention, since the exhaust air when the temperature control unit is driven can be discharged to the outside of the vehicle from the exhaust port, the inside of the vehicle is not filled with heat.

### Best Mode for Carrying out the Invention

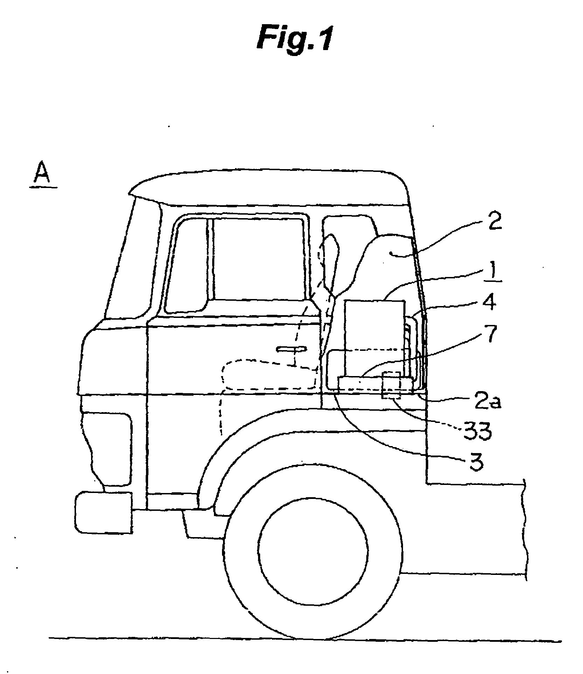

One embodiment of the invention will now be described with reference to the drawings. Fig. 1 is a side view of a front part of a truck on which a vehicle-mounted temperature control device (A) of the invention is mounted. A temperature control unit (1) which constitutes a driving part of the vehicle-mounted temperature control device (A) is installed in a rear cabin (2) of a cab used as a napping room.

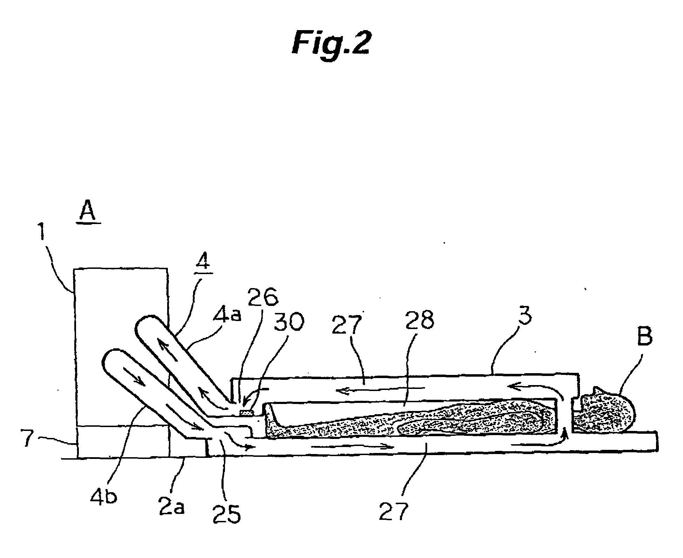

As shown in Fig. 2, the temperature control unit (1), bedding (3) for sleeping of a user (B) which is installed adjacent to the temperature control unit (1) so that the width direction of a vehicle body becomes a longitudinal direction with respect to the temperature control unit (1), and a coupling duct (4) which couples the bedding (3) with the temperature control unit (1) are installed in the rear cabin (2).

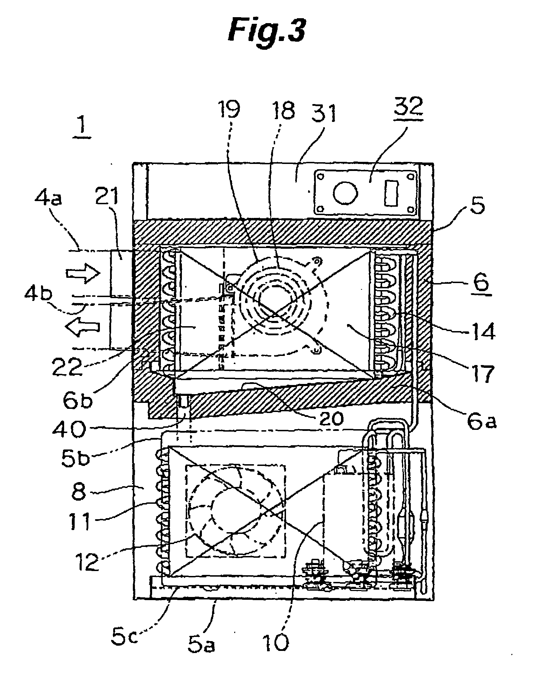

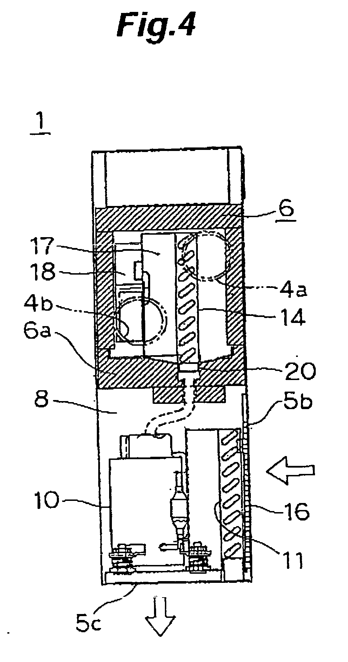

As shown in Fig. 3 which is a sectional view from the front, and Fig. 4 which is a side sectional view of Fig. 3, the temperature control unit (1) forms a box-like outer shell by an outer plate (5) made from a thin steel sheet, is partitioned into upper and lower spaces substantially at a central portion in a height direction by a heat-insulating partition wall (6a), and for example, is bolt-fixed to an upper portion of a vehicle body bottom plate (2a) which is a floor surface of the rear cabin (2) via a mount (7).

A compressor (10) which compresses and discharges refrigerant which forms part of a refrigeration cycle (9), a condenser (11) which receives, radiates, and condenses the discharged high-temperature and high-pressure refrigerant, and a radiation fan (12) which cools high-temperature components, such as the compressor (10) and the condenser (11), are located on a bottom plate (5a), which is a rigid body which forms a bottom portion of the outer plate (5), thereby forming a machine chamber (8).

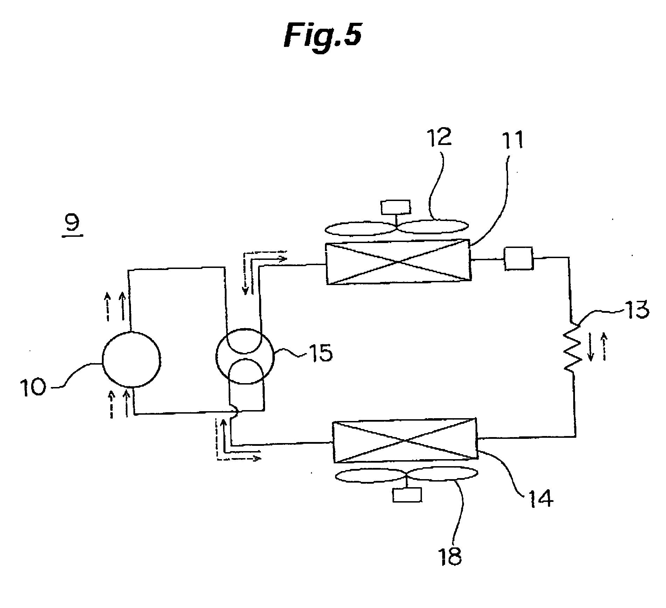

As shown in Fig. 5, the refrigeration cycle (9) is of a vapor compression type in which the compressor (10), the condenser (11), a capillary (13) which is a decompressor, and an evaporator (14) are annularly connected, and the evaporator (14) is made to function as a heat exchanger capable of switching cooing and heating by providing a four-way valve (15) so as to connect together the upstream and downstream of the compressor (10), thereby switching refrigerant flow passages, and in which refrigerant is circulated by the driving of the compressor (10) and is evaporated in the evaporator (14) to generate cool air, or the refrigerant flow passages are switched by the four-way valve (15), and condensation is caused in the evaporator (14) to make the evaporator (14) function as a heat exchanger to generate warm air.

The compressor (10) which is a heavy load in the machine chamber (8) is biased toward one side in a width direction on the bottom plate (5a), and is fixed via vibration-absorbing cushion bodies. The rectangular parallelepiped-shaped condenser (11) in which a meandered refrigerant pipe is fitted into a number of fins, and the depth dimension is made small, is erected along a suction opening (5b) in which the front face of the condenser having a large area is formed on the front face of the outer plate (5), and a filter (16) is provided between the suction opening (5b) and the condenser (11) so as to shield from dust, etc.

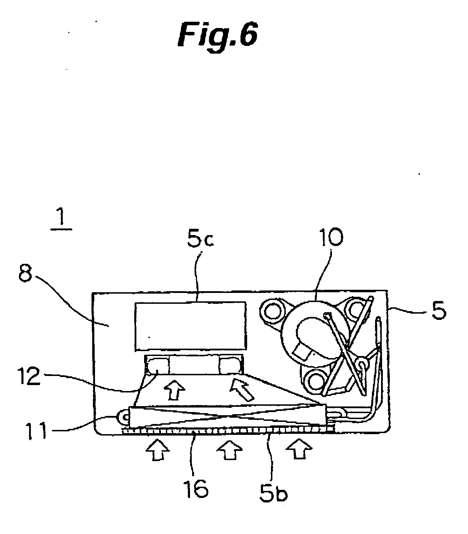

As shown in Fig. 6 which is a plan view of a machine chamber As shown in Fig. which is plan view of machine chamber (8), the radiation fan (12) including an axial flow fan is arranged on the back face of the condenser (11). When a cooling operation is performed, the compressor (10) and the radiation fan (12) are synchronously driven to cool the condenser (11) which has a high temperature with ambient air sucked into the inside from the suction opening (5b), and the air which has performed heat exchange is radiated to the outside of the unit from an exhaust port (5c) formed in the bottom face of the outer plate (5). At this time, since the compressor (10) is positioned at a side portion in the machine chamber (8), and the compressor hardly receives a cooling action by the radiation fan (12), a drop in evaporation temperature caused by supercooling is prevented. Further, the depth dimension of the machine chamber (8) is shortened by arranging the compressor (10) and the radiation fan (12) so as not to overlap each other in the depth direction by a biased distance.

An upper space above the heat-insulating partition wall (6a) is used as a temperature control chamber (17) which generates cooled air or warmed air while serving as a heat-insulating space in which a whole peripheral wall including a top face is formed by the heat-insulating wall (6), such as styrene foam. The evaporator (14) which is a portion of the refrigeration cycle (9) and which receives the refrigerant from the condenser (11) to evaporate the refrigerant during the cooling operation, thereby lowering the temperature of the refrigerant to generate cool air is arranged in an erected state substantially in the central portion of the space.

Similarly to the condenser (11), the evaporator (14) also assumes a rectangular parallelepiped shape in which the depth dimension is made small and which is formed from a meandered refrigerant pipe and a number of fins fitted into the refrigerant pipe. At the back of the evaporator, the blower fan (18) including a sirocco fan which has a diameter narrower than the width dimension of the evaporator (14), and a casing (19) are erected abreast of the evaporator (14) at a flat surface portion of the heat-insulating partition wall (6a).

The top face of the heat-insulating partition wall (6a) on which the evaporator (14) is placed forms a gutter portion (20) which is inclined downward toward one side, and receives melting water of the frost adhering to the evaporator (14) the temperature of which has become a low temperature, and the water collected in the gutter portion (20) is drained to the outside via the inside of the lower machine chamber (8) from the exhaust port (5c).

A return air trunk (21) used to suck cool air into the temperature control chamber (17), which is connected to a return duct (4a) of the coupling duct (4) with the bedding (3) which is an object to be temperature-controlled and which is arranged on the vehicle body bottom plate so as to face the heat-insulating side wall (6b) is opened to an upper wall portion which is positioned slightly ahead of the erected position of the evaporator (14) in the heat-insulating side wall (6b) which forms one side wall of the temperature control chamber (17), and a blowoff air trunk (22) is opened from the casing (19) of the blower fan (18) so that the cool air is introduced into an intake port (25) of cool air for the bedding (3) via a blowoff duct (4b) which leads to the blowoff air trunk (22). In addition, the tip of the return duct (4a) is connected to a return port (26) of the bedding (3).

The bedding (3) has a so-called sleeping bag-like appearance, has an outer surface formed from a heat-insulating body and an inner surface formed from a flexible raw material which allows the passage of moisture, such as sweat, but does not allow the passage of air, and as shown in Fig. 2, is adapted such that an air flow passage (27) which introduces and circulates the blowoff air from the temperature control unit (1) is provided between the outer surface and the inner surface to cool or warm an inner space (28) that the user (B) enters by a cooling or a warming operation.

Accordingly, if the heat insulation performance of the outer surface of the bedding (3) is improved, heat leakage decreases. As a result, internal temperature fluctuations can be made small, and cooling or warming effects can be more efficiently obtained. Additionally, the shape of the bedding is also not limited to the sleeping bag shape, and may be only a lying mat or a sitting mat, or may be an integral configuration of the lying mat, and the sitting mat, so long as the bedding has an air flow passage through at least a portion of which air circulates.

The blowoff duct (4b) and return duct (4a) of the coupling duct (4) are formed from a bellows-like tubular body so that the length dimension thereof can be adjusted, extends so as to incline toward the lower front side from one side of the temperature control chamber (17) of the temperature control unit (1), and is coupled with the intake port (25) and return port (26) which are provided at a longitudinal one end of the bedding (3) installed at the vehicle body bottom plate. A temperature sensor (30) is disposed on the bottom face of the return port (26) of the bedding (3) at the lower end of the return duct (4a) in the coupling duct (4).

The temperature sensor (30) detects the air temperature which has flowed through the air flow passage (27) of the bedding (3) and has reached the return port (26), and controls the operation of the compressor (10) in the temperature control unit (1) so as to supply the air cooled or warmed to a user's desired temperature into the air flow passage (27), and exactly detects the air temperature which flows through the air flow passage (27), thereby always controlling the inside of a sleeping space in an comfortable temperature state, even if there are various load fluctuations, such as heat leakage from the outer surface of the bedding (3) caused by the ambient air and the heat generation load caused by the body temperature of the user (B).

An upper portion of the heat-insulating wall (6) of the top face of the temperature control chamber (17) is used as a electrical component housing portion (31), such as a board, and a control panel (32) is arranged at the front face of the temperature control chamber so as to control the driving of the temperature control unit (1). For example, when a cooling operation is performed, the temperature control can be made by a high-capability and high-efficiency cooling operation by performing circulation such that temperature-controlled cool air is generated by controlling flow passages by the four-way valve (15) of the refrigeration cycle (9) in the temperature control unit (1) so that the refrigerant from the compressor (10) is discharged to the condenser (11) and is evaporated in the evaporator (14), and this cool air is sent to the air flow passage (27) via the blowoff duct (4b) and the intake port (25) of the bedding (3) from the blowoff air trunk (22) by the blower fan (18), cools the inside of the bedding (3), and returns to the evaporator (14) in the temperature control chamber (17) via the return duct (4a) from the return port (26). Further, in the case of a warming operation, the temperature of air is made high by switching the evaporator (14) to the condensation side by the four-way valve (15), and circulation air is warmed by heat exchange so as to be blown off toward the bedding (3).

The bedding (3) can obtain the temperature control effects for both cooling and warming by the employment of the four-way valve (15). However, when only the cooling action is used, a refrigeration cycle from which the four-way valve (15) is removed may be employed. In addition, a battery different from a battery for an automobile may be used for a driving power source of the temperature control unit (1) in the above respective embodiments.

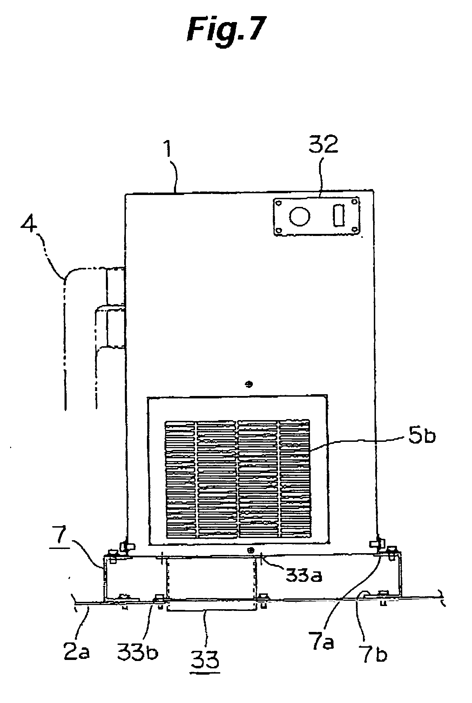

The temperature control unit (1) configured as described above is bolt-fixed to the vehicle body bottom plate (2a) via the mount (7) as described above. As shown in Fig. 7 in which relevant portions are broken off, the mount (7) is made of a U-shaped cross-sectional angle plate which has a peripheral wall surface in the shape of a frame, and is obtained by forming an inward bent piece a(7a) which receives and holds a bottom peripheral edge of the temperature control unit (1), and a bent piece b(7b) which comes into contact with the bottom plate (2a) of the vehicle body and installs the temperature control unit (1) in a predetermined position, thereby locating the temperature control unit (1) in a predetermined height in the rear cabin (2).

Additionally, an opening is bored in the bottom plate (2a) of the vehicle body which faces the exhaust port (5c) formed at the bottom of the temperature control unit (1), and a prismatic exhaust duct (33) is installed over this opening and the exhaust port (5c).

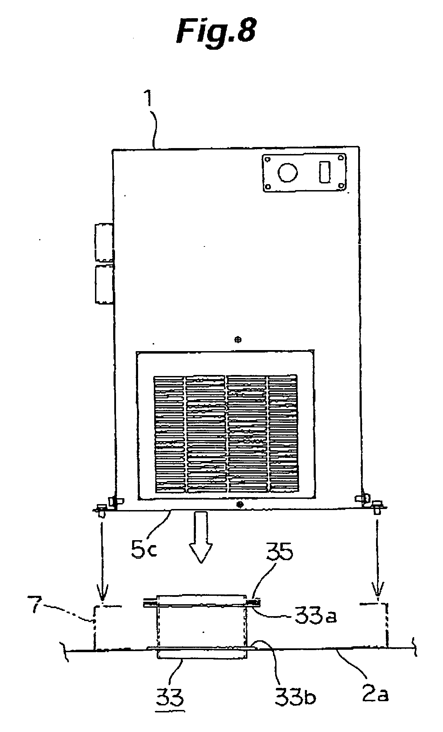

The exhaust duct (33) has a vertical dimension slightly higher than the height of the mount (7) as shown in Fig. 8 which is an assembled state view, an upper tubular portion is fitted into and engaged with the exhaust port (5c) of the temperature control unit (1) by a predetermined length, an upper flange portion (33a) formed at the outer periphery of the exhaust duct is superimposed on and engaged with the peripheral edge of the bottom face of the exhaust port (5c), and the lower portion of the exhaust duct is fitted into the opening of the vehicle body bottom plate (2a) so as to protrude downward from the bottom face of the vehicle body bottom plate (2a) by a predetermined dimension. This lower portion is also bolt-fixed after a lower flange portion (33b) formed at the outer periphery of the exhaust duct is placed on an upper portion of the peripheral edge of the opening of the bottom plate (2a).

An elastic sealing material (35), such as open cell urethane with a predetermined thickness, is interposed between the upper portion of the upper flange portion (33a) and the peripheral edge of the exhaust port (5c). Thanks to the elastic force of the elastic sealing material (35), and the weight of the upper temperature control unit (1), in the upper portion of the exhaust duct, not only a sealing effect can be obtained, but also the exhaust duct (33) can be reliably held and fixed between the temperature control unit (1) and the bottom plate (2a) of the vehicle body especially without being bolt-fixed. Further, since the space is narrow, there are advantages that complicated and difficult screwing operation is unnecessary, and vertical dimensional adjustment can be made and positional deviation can be absorbed by the elastic sealing material (35) .

Accordingly, when installation of the temperature control unit (1) into the rear cabin (2) is performed, the exhaust duct (33) is fitted into the opening of the vehicle body bottom plate (2a), to which the mount (7) is attached, from above, the lower flange portion (33b) is placed on and fixed to the vehicle body bottom plate (2a), the exhaust port (5c) of the temperature control unit (1) is then engaged with the upper flange portion (33a) of the exhaust duct via the elastic sealing material (35), and the bottom plate (5a) of the temperature control unit (1) is anchored to the mount (7), thereby completing attachment operation.

By doing so, a protruding portion is not be formed at the lower portion of the temperature control unit (1) compared to the method of attaching the exhaust duct (33) to the temperature control unit (1) in advance and then placing the exhaust duct on the mount (7). Thus, final assembling operation can be easily performed without paying attention to the integrity of shape during standby and transport in an assembling process. Then, the temperature control unit (1) and the bedding (3) may be connected together by the coupling duct (4), and installation can be made by simple operation even in a narrow cabin space.

Additionally, since the exhaust duct (33) is installed between the mount (7) and the vehicle body bottom plate (2a), the exhaust air from the machine chamber (8) can be discharged to the outside of a vehicle at a shortest distance, and the cabin space can be more efficiently utilized without requiring a separate space for the exhaust duct (33).

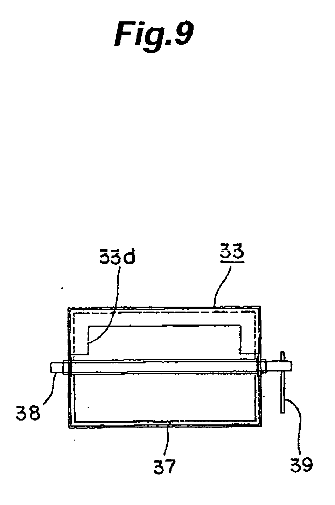

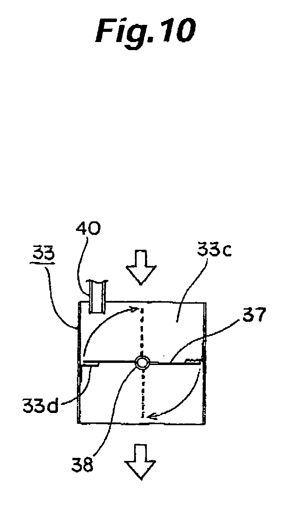

Also, an damper (36) which opens and closes a vertical communication passage is provided at the center of the inside of the exhaust duct (33). As shown in Fig. 9 which is a plan view of a closed state and Fig. 10 which is a side sectional view, the damper (36) is rotatably held by a cover plate (37) which closes a communication passage (33c) which is an internal cross-section space of the exhaust duct (33), and a pivot (38) which is provided at a central portion of the cover plate (37). Generally, the cover plate (37) is brought into a horizontal state and engaged with a stopper plate (33d), thereby closing the communication passage (33c), by the acting forces of an operating lever (39) and a spring (not shown) which are provided out of the tubular portion. However, when the temperature control unit (1) has been driven, the operating lever (39) is operated by manual mechanical operation, or electrically according to the button operation of the control panel (32), whereby the cover plate (37) is rotated by 90 degrees in the direction of an arrow to open the communication passage (33c), and is held in a vertical state by a spring force so that the air of the upper machine chamber (8) can be discharged to the outside of the vehicle.

Accordingly, the communication passage (33c) is opened to discharge air during driving of the temperature control unit (1), and the communication passage (33c) is closed by the damper (36) when the temperature control unit is not driven, so that the noise which enters a vehicle from the outside of the vehicle during traveling can be blocked out. Especially when the temperature control unit (1) is installed in an upper portion, etc. of an engine room, the heat-shielding effect can be exhibited.

Additionally, as mentioned above, the defrosted water from the evaporator (14) in the temperature control chamber (17) reaches the exhaust port (5c) from the gutter portion (20) via a drain pipe (40). At this time, if the lower end of the drain pipe (40) is inserted into the communication passage (33c) so as to be above the rotational locus of the cover plate (37) in the damper (36), the exhaust duct (33) can serve also as a drain pipe to the outside of the vehicle, the communication passage (33c) can be closed without hindering the rotational operation of the cover plate (37), and entering of noise from the outside via the drain pipe can be prevented.

In addition, in the above configuration, the elastic sealing material (35) is provided only between the upper flange portion (33a) of the exhaust duct (33) and the exhaust port (5c) of the temperature control unit (1). However, the elastic sealing material may also be interposed between the lower flange portion (33b) and the vehicle body bottom plate (2a). In this case, the lower portion of the exhaust duct (33) passes through the vehicle body bottom plate (2a), and the lower flange portion (33b) is placed on the vehicle body bottom plate (2a). Thus, simply by placing the exhaust duct (33) on the vehicle body bottom plate (2a), and fitting the upper portion of the exhaust duct into the exhaust port (5c) of the temperature control unit (1) to make the upper portion and the exhaust port engage with each other, the exhaust duct is held and fixed in a predetermined position, and the exhaust duct (33) is pressed from the vertical direction. Therefore, the exhaust duct can be sufficiently fixed and held especially even if bolt-fixation is not performed. It is apparent that the upper and lower portions may be bolt-fixed.

Additionally, the exhaust duct (33) may be formed substantially integrally with a portion of the mount (7). By doing so, the number of parts which constitutes the temperature control unit (1) can be reduced, and the installation work thereof can be easily performed.

Moreover, in the above embodiment, the exhaust port (5c) of the temperature control unit (1) is provided so as to face the opening of the vehicle body bottom plate (2a) in the rear cabin (2). However, the invention is not limited thereto, and the exhaust port from the temperature control unit (1) may be made to protrude to the outside of a vehicle using a place other than the bottom plate of a vehicle body, for example, an opening, such as a window of the rear cabin (2).

Through the above configuration, temperature controlled cool air or warm air is supplied to the bedding (3) on the basis of the user's setting by the control panel (32) of the temperature control unit (1). Thus, a comfortable sleeping space can be always provided even under a variety of used environment conditions, and the cooling or warming capability of the whole cabin is not required, but it is sufficient if only the bedding (3) is cooled or warmed. Therefore, the power consumption becomes minimum and economical, and the effect that the amount of emission of carbon dioxide gas can also be greatly suppressed by stopping idling is exhibited.

Also, since the exhaust air when the temperature control unit (1) has been driven can be discharged to the outside of a vehicle, the inside of the vehicle is not filled with heat, the exhaust duct (33) and the temperature control unit (1) can be easily installed even in a narrow vehicle, and entering of noise, rain, etc. from the outside can also be suppressed.

Next, a non claimed embodiment not forming part of the invention will be described. In the aforementioned embodiment, the cool air or warm air from the temperature control chamber (17) is supplied and circulated into only the bedding (3) provided on the vehicle body bottom plate of the rear cabin (2) of the cab. In this embodiment, separately from a circulating flow passage with the bedding (3), the air in the vehicle is sucked into the temperature control chamber (17), the cool air or warm air from the temperature control chamber (17) is blown off to control temperature of the inside of the cabin, the air after the circulation is sucked into the temperature control chamber (17) again, and the air is discharged to the outside of the vehicle.

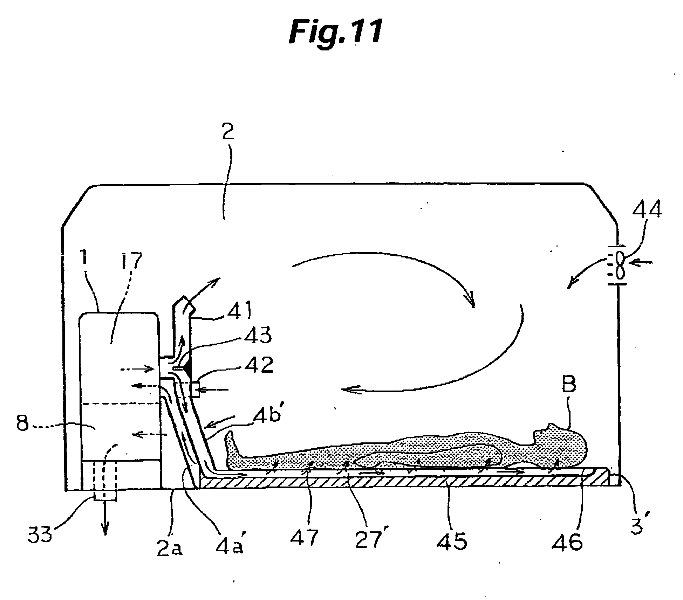

Specifically, as shown in Fig. 11 in which the same reference numerals are given to the same portions as the above embodiment, a lying mat (3') is arranged on the vehicle body bottom plate (2a) of the rear cabin (2), blowoff air and return air are circulated into an air flow passage (27') of the lying mat (3') via a blowoff duct (4b') and a return duct (4a') from the temperature control chamber (17) of the temperature control unit (1). Additionally, a cabin duct (41) into the rear cabin (2) and a suction duct (42) for the air in the vehicle are formed in portions of the blowoff duct (4b') and the return duct (4a') so that an air trunk separate from the circulating air trunk is formed.

In addition, compared to the bedding (3), the lying mat (3') is adapted to provide a plurality of air flow passages (27') which introduces and circulates blowoff air between a heat-insulating mat (45) and a surface sheet (46) to cool or warm the user (B) from below. Fine through holes (47) may be provided in the surface sheet (46) to allow the cold or warm air from the air flow passage (27') to flow out to the upper portion so that the user (B) is directly cooled or warmed.

When the temperature control unit (1) is, for example, operated for cooling, operation is made so that a portion of cool air is supplied to the air flow passage (27') of the lying mat (3'), thereby performing cooling, and cooling air is blown off into the space of the rear cabin (2) from the cabin duct (41) so as to cool the space in the vehicle.

Although a portion of the air which has circulated through the space in the vehicle is sucked into the suction duct (42), joins the air which has circulated through the air flow passage (27') of the mat (3') and has returned, and flows into the temperature control chamber (17) again. However, the quality of the other air in the vehicle is replaced by the exhaust air in the machine chamber (8) through the suction and exhaustion action of the air discharged to the outside of the exhaust duct (33). Thus, the temperature control effect of the circulating air in the air flow passage (27') of the lying mat (3') can be improved, and the space in the vehicle including the rear cabin (2) can obtain a cooling action by new air.

At this time, a switching damper (43) serving as a suction and exhaust device is installed at a branching portion between the blowoff duct (4b') and the cabin duct (41). The switching damper (43) rotates a flap by motor driving to control the cool air current from the temperature control unit (1). By this switching operation, operations, such as cooling performed by making cool air flow into only the lying mat (3'), cooling only in the space in the vehicle, and cooling performed by making cool air flow into both the lying mat (3') and the space in the vehicle can be arbitrarily selected. Additionally, although not particularly shown, the same switching damper may be provided at a branching portion between the return duct (4a') and the suction duct (42) so as to be operated in synchronization with the switching damper (43).

Moreover, if a means which introduces the air in the vehicle into the cab or into the rear cabin (2) of the cab, for example, a ventilation fan (44) is provided in a small opening, and the ventilation fan (44) is operated at an arbitrary time during the driving of the temperature control unit (1) or automatically whereby the air outside the vehicle is introduced into the rear cabin (2), and the air is discharged to the outside of the vehicle along with the air in the vehicle, the inside of the vehicle is not filled with heat, the air in the vehicle can be discharged to the outside of the vehicle, and a more comfortable atmosphere space can be formed by exchanging and purifying air. In addition, the means which introduces the air outside the vehicle is not limited to the ventilation fan (44). Only a small window or opening may be provided, or the installation space of the means may be a proper place in the vehicle, such as a ceiling or a wall surface of a cabin.

### Brief Description of the Drawings

[Fig. 1] Fig. 1 is a side view of a truck on which a temperature control device of one embodiment of the invention is mounted.
[Fig. 2] Fig. 2 is a view showing a usage state of a temperature control device of Fig. 1.
[Fig. 3] Fig. 3 is a sectional view from the front of the temperature control unit in Fig. 1.
[Fig. 4] Fig. 4 is a side sectional view of Fig. 3.
[Fig. 5] Fig. 5 is a schematic configuration view of a refrigeration cycle disposed in Fig. 3.
[Fig. 6] Fig. 6 is a plan view of a machine chamber in Fig. 3.
[Fig. 7] Fig. 7 is a front view showing a state where the temperature control unit of Fig. 3 is attached to a vehicle body bottom plate.
[Fig. 8] Fig. 8 is a front view showing a state before the attachment of the temperature control unit of Fig. 7.
[Fig. 9] Fig. 9 is a plan view showing a damper provided at an exhaust duct of Fig. 7.
[Fig. 10] Fig. 10 is a side sectional view of Fig. 9.
[Fig. 11] Fig. 11 is a view showing a usage state of the temperature control device showing a non claimed embodiment not forming part of the invention.
[Fig. 12] Fig. 12 is a sectional view showing a sleeping bag of a conventional example of the invention.
[Fig. 13] Fig. 13 is a sectional view of an air circulation type mat showing another conventional example of the invention.

### Explanation of References

- 1:: TEMPERATURE CONTROL UNIT
- 2:: REAR CABIN
- 2a:: VEHICLE BODY BOTTOM PLATE
- 3:: BEDDING
- 3':: LYING MAT
- 4:: COUPLING DUCT
- 4a, 4a':: RETURN DUCT
- 4b, 4b':: BLOWOFF DUCT
- 5:: OUTER PLATE
- 5a:: BOTTOM PLATE
- 5b:: SUCTION OPENING
- 5c:: EXHAUST PORT
- 6:: HEAT-INSULATING WALL
- 6a:: HEAT-INSULATING PARTITION WALL
- 6b:: HEAT-INSULATING SIDE WALL
- 7:: MOUNT
- 7a:: BENT PLATE a
- 7b:: BENT PLATE b
- 8:: MACHINE CHAMBER
- 9:: REFRIGERATION CYCLE
- 10:: COMPRESSOR
- 11:: CONDENSER
- 12:: RADIATION FAN
- 14:: EVAPORATOR
- 15:: FOUR-WAY VALVE
- 16:: FILTER
- 17:: TEMPERATURE-CONTROLLED CHAMBER
- 18:: BLOWER FAN
- 19:: CASING
- 20:: GUTTER PORTION
- 21:: RETURN AIR TRUNK
- 22:: BLOWOFF AIR TRUNK
- 25:: INTAKE PORT
- 26:: RETURN PORT
- 27, 27':: AIR FLOW PASSAGE
- 28:: SPACE
- 30:: TEMPERATURE-SENSOR
- 31:: ELECTRICAL COMPONENT HOUSING PORTION
- 32:: CONTROL PANEL
- 33:: EXHAUST DUCT
- 33a:: UPPER FLANGE PORTION
- 33b:: LOWER FLANGE PORTION
- 33c:: COMMUNICATION PASSAGE
- 35:: HEAT-INSULATING SEALING MATERIAL
- 36:: DAMPER
- 37:: COVER PLATE
- 38:: PIVOT
- 39:: OPERATING LEVER
- 40:: DRAIN PIPE
- 41:: CABIN DUCT
- 42:: SUCTION DUCT:
- 43:: SWITCHING DAMPER
- 44:: VENTILATION FAN
- 45:: HEAT-INSULATING MAT
- 46:: SURFACE SHEET
- 47:: THROUGH HOLE

## Claims

1. A vehicle-mounted temperature control device (A)
comprising: a temperature control unit (1) which is attached to the inside(2)of a vehicle to blow off the air temperature-controlled by a cooling or warming action; and an exhaust port which is provided at the wall of a vehicle body to discharge the exhaust air generated during the driving of the temperature control unit to the outside of the vehicle, the temperature control unit comprising: a refrigeration cycle (4) obtained by connecting a compressor (10), a condenser (11) and an evaporator (14) annularly;
a temperature control chamber (17) which houses the evaporator (14) and a blower fan (18) therein; a machine chamber (8) in which the compressor (10) the condenser (11) and a radiation fan (12) are disposed; and a blowoff air trunk (22) and a return air trunk (21) which are connected to the temperature control chamber,
wherein
the temperature control device (A) further comprises:
an exhaust port (5c) which opens on a bottom surface of the temperature control unit and communicates with the machine chamber; **characterised in that** the temperature control chamber (17) is formed from a heat-insulating wall body (6); and
a mount (7) is mounted on the vehicle body and is configured such that the temperature control unit (1) may be placed on it from above; and
an exhaust duct (33) which is disposed between the mount (7) and the vehicle body in a state where the exhaust duct (33) is connected to the exhaust port (5c) and the lower portion of the exhaust duct is fitted into the opening of the vehicle body bottom plate (2a) so as to protrude downward from the bottom face of the vehicle body bottom plate (2a);
the components of the temperature control device (A) being such that when the temperature control unit (1) is placed on the mount (7) from above, the exhaust duct (33) fits into the exhaust port (5c) formed on the temperature control unit (1) so that the machine chamber (8) and the exhaust port (5c) formed at the bottom plate (2a) of the vehicle body communicate with each other through the exhaust duct (33).

2. The vehicle-mounted temperature control device according to claim 1, wherein an elastic sealing material (35) is interposed between the exhaust duct (33) and a peripheral edge of the exhaust port (5c) formed on the temperature control unit. (1)

3. The vahicle-mounted temperature control device according to claim 1 or 2, wherein a damper member (36) arranged to open or close a communication passage inside and outside the vehicle is disposed in the exhaust duct. (33).

4. The vehicle-mounted temperature control device according to claim 1 or 2, wherein the temperature control unit (1) includes a suction and exhaust device arranged to suck air in the vehicle and discharge air from the vehicle to the outside of the vehicle, separately from an air trunk which is controlled for cooling or warming by the circulation of blowoff air and return air from the temperature control unit.

5. The vehicle-mounted temperature control device according to claim 3, comprising means arranged to introduce air from outside the vehicle into a cab or a rear cabin of the cab of the vehicle.

## Patentansprüche

1. Temperaturregelvorrichtung (A) an Bord eines Fahrzeugs, die Folgendes umfasst:
einen Temperaturregler (1), der an der Innenseite (2) eines Fahrzeugs angebracht ist, um die durch Kühl- oder Heizwirkung temperaturgeregelte Luft abzublasen; und eine Ablassöffnung, die an der Wand einer Fahrzeugkarosserie vorgesehen ist, um die beim Betreiben des Temperaturreglers erzeugte Abluft aus dem Fahrzeug abzulassen, wobei der Temperaturregler Folgendes umfasst:
einen Kühlkreislauf (4), der durch ringförmiges Zusammenschließen eines Kompressors (10), eines Kondensators (11) und eines Verdunsters (14) erzielt wird;
eine Temperaturregelkammer (17), die den Verdunster (14) und einen Gebläselüfter (18) darin aufnimmt;
eine Maschinenkammer (8), in der der Kompressor (10), der Kondensator (11) und ein Strahlungslüfter (12) angeordnet sind; und
eine Abblasluftleitung (22) und eine Rückfuhrungsluftleitung (21), die mit der Temperaturregelkammer verbunden sind, wobei
die Temperaturregelvorrichtung (A) ferner Folgendes umfasst:
eine Abluftöffuung (5c), die in eine Bodenfläche des Temperaturreglers zündet und mit der Maschinenkammer in Verbindung ist;
**dadurch gekennzeichnet, dass**
die Temperaturregelkammer (17) von einem wärmeisolierenden Wandkörper (6) gebildet wird; und
eine Halterung (7) an der Fahrzeugkarosserie montiert und so konfiguriert ist, dass der Temperaturregler (1) von oben darauf platziert werden kann; und
einen Abluftkanal (33), der zwischen der Halterung (7) und der Fahrzeugkarosserie in einem Zustand angeordnet ist, in dem der Abluftkanal (33) mit der Abluftöffnung (5c) verbunden ist und der untere Abschnitt des Abluftkanals in einer Öffnung der Bodenplatte (2a) der Fahrzeugkarosserie steckt und von der Unterseite der Bodenplatte (2a) der Fahrzeugkarosserie nach unten vorsteht;
wobei die Komponenten der Temperaturregelvorrichtung (A) derart sind, dass der Abluftkanal (33), wenn der Temperaturregler (1) von oben auf der Halterung (7) platziert wird, so in die am Temperaturregler (1) ausgebildete Abluftöffnung (5c) passt, dass die Maschinenkammer (8) und die an der Bodenplatte (2a) der Fahrzeugkarosserie ausgebildete Abluftöffnung (5c) durch den Abluftkanal (33) miteinander in Verbindung sind.

2. Temperaturregelvorrichtung an Bord eines Fahrzeugs nach Anspruch 1, wobei ein elastisches Dichtungsmaterial (35) zwischen dem Abluftkanal (33) und einem Umfangsrand der arm Temperaturregler (1) ausgebildeten Abluftöffnung (5c) positioniert ist.

3. Temperaturregelvorrichtung an Bord eines Fahrzeugs nach Anspruch 1 oder 2, wobei ein Dampfungselement (36) zum Öffnen oder Schließen eines Kommunikationskanals innerhalb und außerhalb des Fahrzeugs im Abluftkanal (33) angeordnet ist.

4. Temperaturregelvorrichtung an Bord eines Fahrzeugs nach Anspruch 1 oder 2, wobei der Temperaturregler (1) eine Ansaug- und Ablassvorrichtung zum Ansaugen von Luft in das Fahrzeug und zum Ablassen von Luft aus dem Fahrzeug hinaus separat von einer Luftleitung aufweist, die zum Kühlen oder Heizen durch Umwälzen von Abblasluft und Rückfuhrungsluft vom Temperaturregler gesteuert wird.

5. Temperaturregelvorrichtung an Bord eines Fahrzeugs nach Anspruch 3, die Mittel zum Einleiten von Luft von außerhalb des Fahrzeugs in ein Führerhaus oder eine hintere Kabine des Führerhauses des Fahrzeugs umfasst.

## Revendications

1. Dispositif de régulation de la température monté dans un véhicule (A), comprenant : une unité de régulation de la température (1), fixés sur l'intérieur (2) d'un véhicule pour purger l'air, en réglant la température par une action de refroidissement ou de réchauffement; et un orifice d'évacuation agencé au niveau de la paroi de la carrosserie du véhicule, pour décharger l'air d'évacuation produit au cours de l'entraînement de l'unité de régulation de la température vers l'extérieur du véhicule, l'unité de régulation de la température comprenant : un cycle de réfrigération (4) assuré en connectant un compresseur (10), un condenseur (11) et un évaporateur (14) de manière annulaire ;
une chambre de régulation de la température (17), recevant l'évaporateur (14) et un ventilateur de soufflage (18) ;
une chambre de machines (8), dans laquelle sont agencés le compresseur (10), le condenseur (11) et un ventilateur à rayonnement (12) ; et un conduit d'air de purge (22) et un conduit d'air de retour (21), connectés à la chambre de régulation de la température ;
dans lequel
le dispositif de régulation de la température (A) comprend en outre :
un orifice d'évacuation (5c) ouvert sur une surface inférieure de l'unité de régulation de la température, et communiquant avec la chambre de machines ;
**caractérisé en ce que**
la chambre de régulation de la température (17) est formée à partir d'un corpus de paroi calorifuge (6) ; et
un support (7), monté sur la carrosserie du véhicule et configuré de sorte que l'unité de régulation de la température (1) peut y être placée d'en haut ;
et
un conduit d'évacuation (33), agencé entre le support (7) et la carrosserie du véhicule, dans un état dans lequel le conduit d'évacuation (33) est connecté à l'orifice d'évacuation (5c), la partie inférieure du conduit d'évacuation étant fixée dans une ouverture de la plaque inférieure de la carrosserie du véhicule (2a), de sorte à déborder vers le bas à partir de la face inférieure de la plaque inférieure de la carrosserie du véhicule (2a) ;
les composants du dispositif de régulation de la température (A) étant tels que lorsque l'unité de régulation de la température (1) est placée d'en haut sur le support (7), le conduit d'évacuation (33) est ajusté dans l'orifice d'évacuation (5c) formé sur l'unité de régulation de la température (1), la chambre de machines (8) et l'orifice d'évacuation (5c) formé au niveau de la plaque inférieure (2a) de la carrosserie du véhicule communiquent ainsi l'un avec l'autre à travers le conduit d'évacuation (33).

2. Dispositif de régulation de la température monté dans un véhicule selon la revendication 1, dans lequel un matériau d'étanchéité élastique (35) est agencé entre le conduit d'évacuation (33) et un bord périphérique de l'orifice d'évacuation (5c) formé sur l'unité de régulation de la température (1).

3. Dispositif de régulation de la température monté dans un véhicule selon les revendications 1 ou 2, dans lequel un élément amortisseur (36), destiné à ouvrir ou à fermer un passage de communication à l'intérieur ou à l'extérieur du véhicule, est agencé dans le conduit d'évacuation (33).

4. Dispositif de régulation de la température monté dans un véhicule selon les revendications 1 ou 2, dans lequel l'unité de régulation de la température (1) englobe un dispositif d'aspiration et d'évacuation destiné à aspirer l'air dans le véhicule et à décharger l'air du véhicule vers l'extérieur du véhicule, de manière séparée d'un conduit d'air, contrôlé de sorte à assurer un refroidissement et un réchauffement par l'intermédiaire d'une circulation de l'air d'évacuation et de l'air de retour de l'unité de régulation de la température.

5. Dispositif de régulation de la température monté dans un véhicule selon la revendication 3, comprenant un moyen destiné à introduire l'air de l'extérieur du véhicule dans un compartiment ou une cabine arrière du compartiment du véhicule.
